(19) Europäisches Patentamt
European Patent Office
Office européen des brevets

(11) **EP 3 423 732 B1**

(12) **EUROPEAN PATENT SPECIFICATION**

(45) Date of publication and mention
of the grant of the patent:
**30.10.2019 Bulletin 2019/44**

(21) Application number: **16706665.3**

(22) Date of filing: **29.02.2016**

(51) Int Cl.:
*F16D 55/36* ^(2006.01)     *B25J 9/00* ^(2006.01)
*B25J 13/00* ^(2006.01)     *B25J 17/00* ^(2006.01)
*F16D 63/00* ^(2006.01)     *F16D 65/18* ^(2006.01)
*B25J 19/00* ^(2006.01)

(86) International application number:
**PCT/EP2016/054212**

(87) International publication number:
**WO 2017/148499 (08.09.2017 Gazette 2017/36)**

(54) **A MULTIPLE DISC BRAKE FOR AN INDUSTRIAL ROBOT AND AN INDUSTRIAL ROBOT INCLUDING THE MULTIPLE DISC BRAKE**

MULTISCHEIBENBREMSE FÜR EINEN INDUSTRIEROBOTER, UND INDUSTRIEROBOTER MIT SO EINER BREMSE

FREIN À MULTI-DISQUE POUR ROBOT INDUSTRIEL, ET ROBOT INDUSTRIEL AVEC UN TEL FREIN MULTI-DISQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.01.2019 Bulletin 2019/02**

(73) Proprietor: **ABB Schweiz AG**
**5400 Baden (CH)**

(72) Inventors:
• **AHMAD, Aftab**
**722 10 Västerås (SE)**
• **NOVKOVIC, Tonci**
**21000 Split (HR)**
• **TRANGÄRD, Arne**
**723 35 Västerås (SE)**

(74) Representative: **Savela, Reino Aleksi**
**ABB AB**
**Intellectual Property**
**Forskargränd 7**
**721 78 Västerås (SE)**

(56) References cited:
EP-A1- 1 974 870        WO-A1-2008/153519
DE-A1- 3 519 505        DE-A1-102015 102 809
JP-A- 2015 100 878

**Description**

Technical field

The present disclosure relates to the field of industrial robots, and to multiple disc brakes for actuators of industrial robots.

Background

Intrinsic safety is an important design requirement for industrial robots. The momentum created by moment and weight of industrial robots can cause hazard to humans surrounding them, and it is important to isolate personnel from the robot's working area and ensure that movement can be easily halted at powered failure and emergency stops.
An industrial robot is referred to as an automatically controlled, reprogrammable, multipurpose manipulator with a plurality of degrees of freedom and an ability to perform work tasks independently. It may have several axes each powered by an actuator such as an electrical motor. The motion of each motor is halted by actuating a brake that stops the motion of the motor. Traditionally electromagnetic actuating disc brakes are common in robot arms, though these brakes are often too large and too heavy for small size robot systems.
EP1974870A1 discloses an industrial robot having a plurality of independently controlled electromagnetic brakes

Summary

It is thus an object of the disclosure to alleviate at least some of the drawbacks with the known robot brakes. It is a further object of the disclosure to provide a robot brake that is a cost efficient alternative to known robot brakes. It is a still further object of the disclosure to provide a robot brake that is a reliable alternative to other known robot brakes. These object and others are at least partly achieved by the robot brake according to the independent claim, and by the embodiments according to the dependent claims.
According to one aspect, the disclosure relates to a multiple disc brake for an industrial robot. The multiple disc brake includes a hub. The multiple disc brake further includes at least one friction disc arranged to the hub such that it rotates with the motion of the hub. The multiple disc brake further includes a braking disc arranged freely rotatable to the hub, wherein the braking disc has at least one brake protrusion protruding in a radial direction of the braking disc. The multiple disc brake further includes an actuating arrangement including an actuator and a stop member. The actuating arrangement is arranged to move the stop member such that the stop member and the at least one brake protrusion becomes engaged, whereby any rotational motion of the braking disc is halted and a braking force is created by friction acting between the at least one friction disc and the braking disc.
When the actuating arrangement is powered, it moves the stop member such that it lies below the rotational movement path of the at least brake protrusion and holds it there. The hub with discs arranged to a motor shaft are then free to rotate with the motion of the motor shaft. When the actuating arrangement is not powered, the actuating arrangement does not act upon the stop member anymore and the stop member moves such that it lies in the rotational movement path of the at least brake protrusion. At least one brake protrusion will become engaged with the stop member and thereby halted in its rotational motion, whereby a braking torque is created. Thus, it is only when power is off that the braking torque is created to thereby create a reliable braking mechanism for the robot in case e.g. of power failure.
The multiple disc brake is a relatively cost efficient alternative to other multiple disc brakes for robots, as it is made of parts that are easy to construct or are already available. Further, it has a relatively small size compared to other multiple disc brakes for robots, as is has a different actuating arrangement than other known multiple disc brakes. As the friction disc(s) are in motion also when the braking torque is created, the actuating force of the actuating arrangement does not has to be very strong to create the braking torque.
According to one embodiment, the multiple disc brake includes a spring arrangement arranged to the hub arranged to compress the braking disc and the at least one friction disc. The spring arrangement may include a wave spring or a plurality of springs wound to screws. The spring arrangement increase the normal force of a braking torque.
According to one embodiment, the multiple disc brake includes a clamping disc arranged to the hub, the clamping disc has a plurality of clamping protrusions protruding in a radial direction of the clamping disc, where at least one brake protrusion is accommodated in between two clamping protrusions.
According to one embodiment, one of the at least one friction discs is interleaved between the clamping disc and the braking disc. Thus, a braking force can be created on both sides of the friction disc thus increasing the braking torque.
According to one embodiment, the stop member is fixed in the rotational directions of the braking disc, and movable in an axial direction of the hollow shaft of the hub.
According to one embodiment, the multiple disc brake includes a housing accommodating the hub and the actuating arrangement, wherein the housing is arranged to be attached to the motor of an axis of an industrial robot.

According to one embodiment, the multiple disc brake includes two or three friction discs.

According to one embodiment, the actuator is an electro-mechanical actuator.

According to one embodiment, the actuator includes a solenoid.

According to one embodiment, the actuator includes an electromagnetic coil.

According to one embodiment, the stop member includes a brake pin. As the braking disc is freely rotatable to the hub, the brake pin can be small and does not need large space.

According to one embodiment, the stop member includes a braking ring with at least one incisions matching the at least one brake protrusion.

According to a second aspect, the disclosure relates to an industrial robot with a multiple disc brake according to any of the embodiments of the first aspect, arranged to a motor shaft of a motor of an axis of the industrial robot.

According to one embodiment, the multiple disc brake is arranged to the motor shaft of a rear side of the motor.

Brief description of the drawings

Fig. 1 shows an example of an industrial robot with a plurality of motor actuated axes.

Fig. 2 shows a cross section of a multiple disc brake according to one embodiment of the disclosure.

Fig. 3 shows the hub and multiple of discs of Fig. 2 according to one embodiment of the disclosure.

Fig. 4 shows an exploded view of the hub with multiple of discs of Fig. 3.

Fig. 5 shows a stripped version of the multiple disc brake in Fig. 2 when the solenoid is powered and the brake pin is down according to one embodiment.

Fig. 6 shows the arrangement in Fig. 5 where the solenoid has been obviated, but is not powered and the brake pin is up.

Fig. 7 shows a cross section of a multiple disc brake according to another embodiment of the disclosure.

Fig. 8 shows a top view of the embodiment shown in Fig. 7.

Fig. 9 shows a cross section of a multiple disc brake according to a further embodiment of the disclosure.

Detailed description

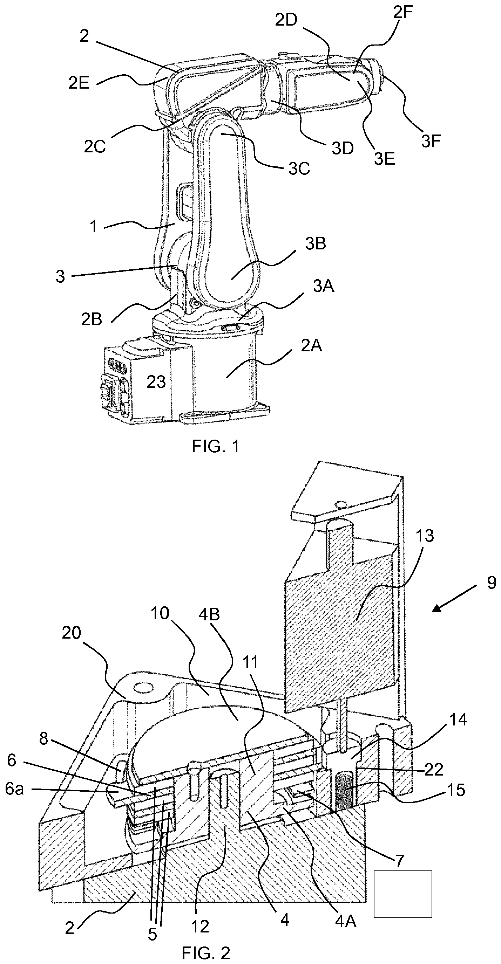

In Fig. 1 an industrial robot 1 with a plurality of degrees of freedom (DOF) is shown. The robot 1 has six axes 3, and each joint of an axis is driven by an actuator 2. In case of a direct drive, a link is directly driven by an actuator 2. Three commonly used actuators for robots are hydraulic, pneumatic or electromagnetic. The most common type is however electromagnetic actuators, of which there are a plurality of types of motors, e.g. stepper motor, permanent-magnet direct current (DC) motor and brushless motors. A transmission transfers the mechanical power from the actuator to the joint.

In the robot 1 a first axis 3A is located at the robot base and allows the robot 1 to rotate from side to side. A first actuator 2A drives the first axis 3A. A second axis 3B allows the lower arm of the robot 1 to extend forward and backward. A second actuator 2B drives the second axis 3B. A third axis 3C extends the robot's vertical reach. A third actuator 2C drives the third axis 3C. A fourth axis 3D is working in conjunction with a fifth axis 3E. The fourth axis 3D is known as the wrist roll and rotates the upper arm of the robot 1 in a circular motion. A fourth actuator 2D drives the fourth axis 3D. The fifth axis 3E allows the wrist of the upper robot arm to tilt up and down. This axis 3E is responsible for the pitch and yaw motion. A fifth actuator 2E drives the fifth axis 3E. A sixth axis 3F allows the wrist of the robot's arm to rotate in a circular motion, thus the twisting motion. A sixth actuator 2F drives the sixth axis 3F. Each actuator 2, i.e. a motor, drives its connected axis 3 via a transmission and makes use of a brake for halting or reducing the motion of the motor shaft of each motor. A motor can be said to have a transmission side where the motor shaft is engaged with the transmission, and a rear side where the motor shaft sticks out from the motor. Each brake is powered via cables connected to the power net, and the braking is controlled from a control unit, e.g. a robot control unit 23.

In the following, a motor arranged to drive a robot axis 3 of any of the axes of the robot 1 in Fig. 1 is referred to as a "motor 2". In Fig. 2 a cross section of a multiple disc brake 10 according to one embodiment is shown that is attached to a motor shaft 12 on the rear side of a motor 2. The multiple disc brake 10 includes a hub 4 with a hollow shaft 11 designed to be thread on and attached to the motor shaft 12 of the motor 2. The hollow shaft 11 is thus co-axial with the motor shaft 12 when arranged to the motor shaft 12, and thus co-axially attached to the motor shaft 12.

The hub 4 has a bottom member 4a here in the shape of a hollow disc. The hub 4 including the hollow shaft 11 and the bottom member 4a is made in one piece. The bottom member 4a is located at one end of the hollow shaft 11. The bottom member 4a has one first side arranged to face the motor 2. The bottom member 4a further has a second side arranged to face multiple discs that are arranged to the hub 4. The hollow shaft 11 protrudes in a perpendicular direction of the second side. The hollow shaft 11 is further arranged in the center of the bottom member 4a. The multiple disc brake 10 is also arranged with a top member 4b here in the shape of a circular disc. The top member 4b is fastened to the upper part of the hollow shaft 11 with a fastening arrangement, e.g. with one or two screws (only one is shown in Fig. 2). Between the bottom member 4a and the top member 4b a multiple of discs are arranged.

The multiple of discs arranged to the hub 4 may be threaded on the hollow shaft 11. Some discs are arranged to the hub 4 such that they will always rotate with the motion of the hub 4 and the motor shaft 12 when the hub 4 is attached to the motor shaft 12. Some other discs are arranged to the hub 4 such that they are freely rotating with the motion of the hub 4 and the motor shaft 12 when the hub 4 is attached to the motor shaft 12. In Fig. 2 there are three friction discs 5 arranged to the hub 4 such that they each rotate with the motion of the hub 4 when the hub 4 is rotating with the motor shaft 12. However, alternative multiple disc brakes 10 within the scope of the disclosure may only have one or two, or even four or five friction discs 5 arranged to the hub 10. Thus, any friction disc 5 of the multiple disc brake 10 is arranged to the hub 4 such that it will always rotate with any rotational motion of the hub 4.

The multiple disc brake 10 further includes a braking disc 6 arranged freely rotatable to the hub 4. The braking disc 6 has at least one brake protrusion 6A, 6B protruding in a radial direction of the braking disc 6. The braking discs 6 in the Figs. 2-6 have got two brake protrusions 6A, 6B located on opposite sides of the braking disc 6. The brake protrusions 6A, 6B are arranged along the circumferential of the braking disc 6. The braking disc 6 may however have only one brake protrusion, or three, four, five or six etc, arranged equally spread out along the circumferential of the braking disc 6. The brake protrusions 6A, 6B may each have a rectangular shape, and the braking disc 6 including the brake protrusions 6A, 6B may be made in one piece. The braking disc 6 may be made of steel.

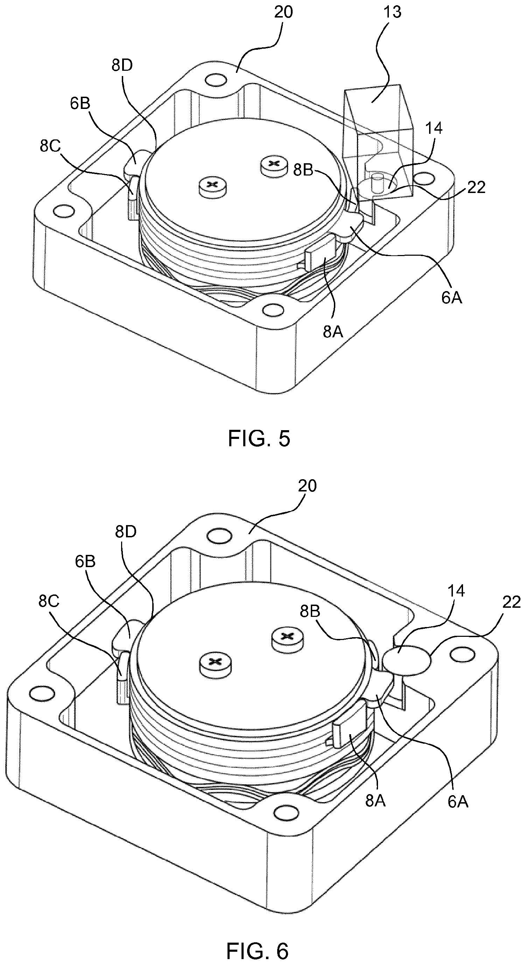

The multiple disc brake 10 further includes an actuating arrangement 9 including an actuator 13 and a stop member in the form of a brake pin 14. The actuator 13 is here an electro-mechanical actuator. The brake pin 14 is fixed in the rotational directions of the braking disc 6, and movable in an axial direction of the of the hollow shaft 11 of the hub 4, which also is the axial direction of the motor shaft 12 when the multiple disc brake 2 is attached to the motor shaft 12. In the embodiment in Fig. 2, the actuator 13 includes a solenoid. The actuator 13 further has a protrusion protruding in an axial direction of the hollow shaft 11 against the brake pin 14. The brake pin 14 is powered by a push spring 15. The brake pin 14 is here hollow and accommodates the push spring 15 in the hollowness. The brake pin 14 is accommodated in a guiding groove 22, e.g. in a housing 20 of the multiple disc brake 10, such that the brake pin 14 is steered in the axial direction of the hollow shaft 11 when pushed down by the protrusion of the actuator 13 or released as determined by the solenoid. However, other alternative arrangements may be considered. The actuating arrangement 9 is arranged to move the brake pin 14 such that the brake pin 14 and the at least one brake protrusion 6A, 6B become engaged, whereby any rotational motion of the braking disc 6 is halted and a braking force is created by friction acting between the at least one friction disc 5 and the braking disc 6. A protrusion of the brake pin 14 lies against a knee of the housing 20 when the brake pin 14 is pushed down. In Figs. 5 and 6 the multiple disc brake 10 is illustrated when not braking (Fig. 5) and when braking (Fig. 6). When no braking force is demanded as illustrated in Fig. 5, the solenoid is powered and thus "on" and pushes the brake pin 14 downwards, and thereby compresses the push spring 15. The brake pin 14 is then located below the braking disc 6 in the direction of the motor 2, and the braking disc 6 can rotate with the motion of the hub 4, i.e. the motion of the motor shaft 12, without being stopped. When a braking force is demanded as illustrated in Fig 6, the solenoid is controlled to be "off' and not powered, and the solenoid will release its force on the brake pin 14 and the push spring 15 will push on the brake pin 14 with a spring force in order to expand, such that the brake pin 14 moves in the axial direction of the hollow shaft 11 away from the motor 2. The brake pin 14 will then be located in the rotational movement path of the at least one brake protrusion 6A, 6B and one of the brake protrusions 6A, 6B will become engaged with the brake pin 14 and creates the braking torque of the multiple disc brake 10. The motion of the braking disc 6 will thus be halted. Although one brake protrusion 6A, 6B is blocked by the brake pin 14, the motor shaft 12 can still rotate because of friction connection between the discs arranged on the hub 4. A friction disc 5 that is located next to the braking disc 6 will continue to rotate with the motion of the hub 4, and thus the motor shaft 12, and a friction force will thereby be created between the braking disc 6 and the friction disc 5. The friction force is created between the opposite located surfaces of the braking disc 6 and the friction disc 5. The rotational motion of the motor shaft 12 will then gradually become slower until the desired rotational motion of the motor shaft 12 has been achieved. As understood, the braking force may be enhanced by having more friction discs 5 arranged to the hub 4 next to a disc that is securely attached to the hub 4.

The multiple disc brake 10 may include a housing 20 accommodating the hub 4 and the actuating arrangement 9. The housing 20 may be arranged to be attached to the motor 2. In the embodiment shown in Fig. 2, the actuating arrangement 9 is attached to the housing 20. The housing 20 may also cover the hub 4 and the actuating arrangement 9 in order to protect the parts and avoid any external interference. The housing 20 may also be divided in different parts as will be apparent from the following.

The multiple disc brake 10 may include a spring arrangement 7 in order to compress the multiple discs arranged to the hub 4. In Figs. 2-8 the spring arrangement 7 is in the shape of a wave spring arranged to the hub 4. The wave spring has a shape of a disc with a centric hole. The wave spring has a wavy shape and will become compressed when exposed to force in the axial direction of the hole. As can be seen from the embodiments in Figs. 2-8, the wave spring is thread on the hub 4 and arranged directly to the bottom member 4A of the hub 4. When the top member 4B is attached to the hub 4, the wave spring is arranged to compress the multiple discs arranged to the hub 4, e.g. the braking disc 6 and the at least one friction disc 5 between the bottom member 4A the top member 4B.

The wave spring may be selected based on the brake torque $T$ requirements of the multiple disc brake 10 using the following relation:

$$T = (n - 1) \cdot 2 \cdot F_s \cdot \mu \cdot r_{av} \qquad (1)$$

where n is the number of friction discs 5, $F_s$ is the spring force of the wave spring, $\mu$ is the friction coefficient of the friction material of the friction discs 5, and $r_{av}$ is the average radius where the friction force is acting. The material of the wave spring is e.g. spring steel. The amount of braking torque created by the multiple disc brake 10 is proportional to the created friction between the discs arranged on the hub 4, and may be defined with a normal force from the waved spring disc and a friction coefficient from the friction discs 5.

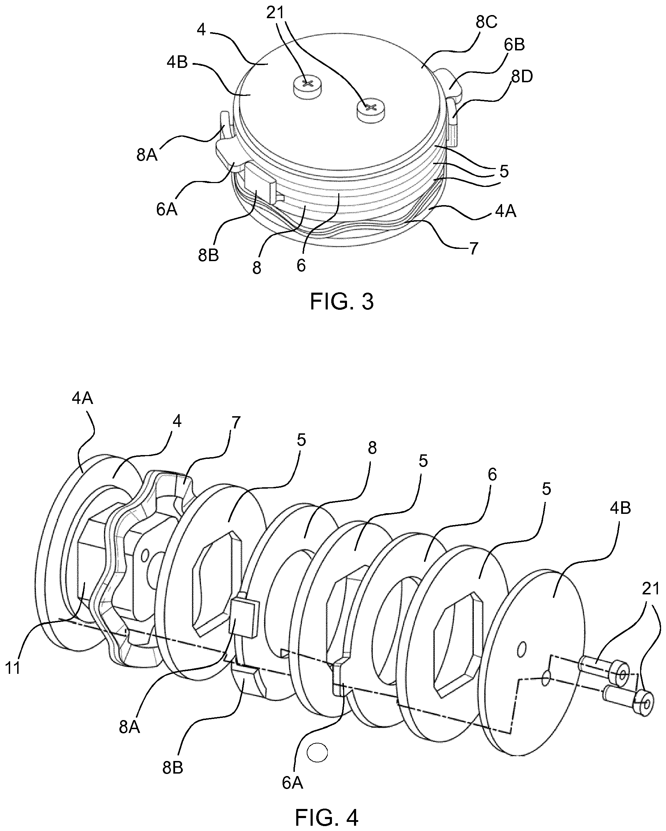

The multiple disc brake 10 may further include a clamping disc 8 arranged to the hub 4. The clamping disc 8 has a plurality of clamping protrusions 8A, 8B, 8C, 8D protruding in a radial direction of the clamping disc 8. The clamping disc 8 has a circular outer shape and a circular inner hole. As can be seen from Figs. 3-6, the circular outer shape is interrupted by the clamping protrusions 8A, 8B, 8C, 8D protruding in the radial direction of the clamping disc 8. The clamping protrusions 8A, 8B, 8C, 8D are thereafter protruding in an axial direction of the hollow shaft 12 of the hub 4. This direction is perpendicular to the direction of the radial direction of the clamping disc 8 against the braking disc 6. At least one brake protrusion 6A, 6B is accommodated in between two clamping protrusions 8A, 8B, 8C, 8D. Now turning to Fig. 3, this configuration is shown in greater detail. Here the hub 4 assembled with multiple of discs is shown in isolation. Next to the bottom member 4A of the hub 4, the wave spring 7 is arranged. Thereafter one friction disc 5, the clamping disc 8, a further friction disc 5, the braking disc 6, a still further friction disc 5 and finally the top member 4B. The top member 4B is attached to the hollow shaft 11 (Fig. 1) by an attachment arrangement 21, here two screws. As evident from Fig. 3, one friction disc 5 is interleaved between the clamping disc 8 and the braking disc 6. When the braking disc 6 is halted, also the clamping disc 8 will be halted as it follows the motion of the braking disc 6. The friction disc 5 will however continue to rotate with the motion of the hub 4. A friction force will then be created on both sides of the interleaved friction disc 5 as each of the sides of the friction disc 5 is in contact with one of the sides of the clamping disc 8 and the braking disc 6, respectively. Each of the two brake protrusions 6A, 6B is accommodated between two clamping protrusions 8A, 8B, 8C, 8D. That is, one brake protrusion 6A is accommodated between a first set of the two clamping protrusions 8A, 8B, and the other brake protrusion 6B is accommodated between a second set of two opposite located clamping protrusions 8C, 8D. Each set of clamping protrusions 8A, 8B, 8C, 8D is designed such that a brake protrusion 6A, 6B fit snuggly between the two clamping protrusions 8A, 8B, 8C, 8D of each set when a friction disc 5 is arranged in between the braking disc 6 and the clamping disc 8. The brake protrusion 6A thus has a width that is slightly smaller than a distance between the clamping protrusions 8A, 8B of the matching set, and the other brake protrusion 6B thus has a width that is slightly smaller than a distance between the other clamping protrusions 8C, 8D of the matching set. Further, the brake protrusions 6A, 6B have an axial extension being at least the thickness of a friction disc 5 plus the thickness of the braking disc 6. The radial extension of the clamping protrusions 8A, 8B, 8C, 8D is such that it extends at maximum 50% the radial extension of the brake protrusions 6A, 6B, for example 40%, 30% or 20% of the radial extension of the brake protrusions 6A, 6B, when the discs are arranged to the hub 4. Thereby the brake pin 14 may be engaged with a brake protrusion 6A, 6B without acting upon any of the clamping protrusions 8A, 8B, 8C, 8D. The clamping protrusions 8A, 8B, 8C, 8D holds the clamping disc 8 to the braking disc 6, and also strengthens the engaged brake protrusion 6A, 6B in both rotational directions of the braking disc 6 when the brake pin 14 is engaged with the brake protrusion 6A, 6B.

In Fig. 4 an isolated exploded view of the hub 4 in Fig. 3 is illustrated, and the same references are used. From Fig. 4 it can be seen that the outer side of the hollow shaft 11 has a square shaped cross section in this embodiment. The edges of the square are cut such that the square shaped cross section of the hollow shaft 11 becomes chamfered. The at least one friction disc 5 has a centric hole with a shape that matches the shape of the outer side of the hollow shaft 11. As can be seen from Fig. 4, the at least one friction disc 5 may have a centric hole with a square shape. The edges of the square are chamfered. When the at least one friction disc 5 is thread over the hollow shaft 11, the outer side of the hollow shaft 11 is engaged with the sides of the centric hole such that the at least one friction disc 5 follows the motion of the hub 4. The at least one friction disc 5 is thus not freely rotatable around the hollow shaft 11 of the hub 4. Instead, it follows any rotational motion of the hollow shaft 11. The at least one friction disc 5 is made of a friction material, and may be machined from moulded friction sheets.

The braking disc 6 and the clamping disc 8 each has a centric circular hole that has a radius larger than the largest radius of the outer side of the hollow shaft 11. Thereby the braking disc 6 and the clamping disc 8 both can rotate freely in respect of the hollow shaft 11. The bottom member 4A of the hub 4 may have a circular recess accommodating the wave spring 7 in order to hold the wave spring 7 in place to the hub 4 and bottom member 4A of the hub 4.

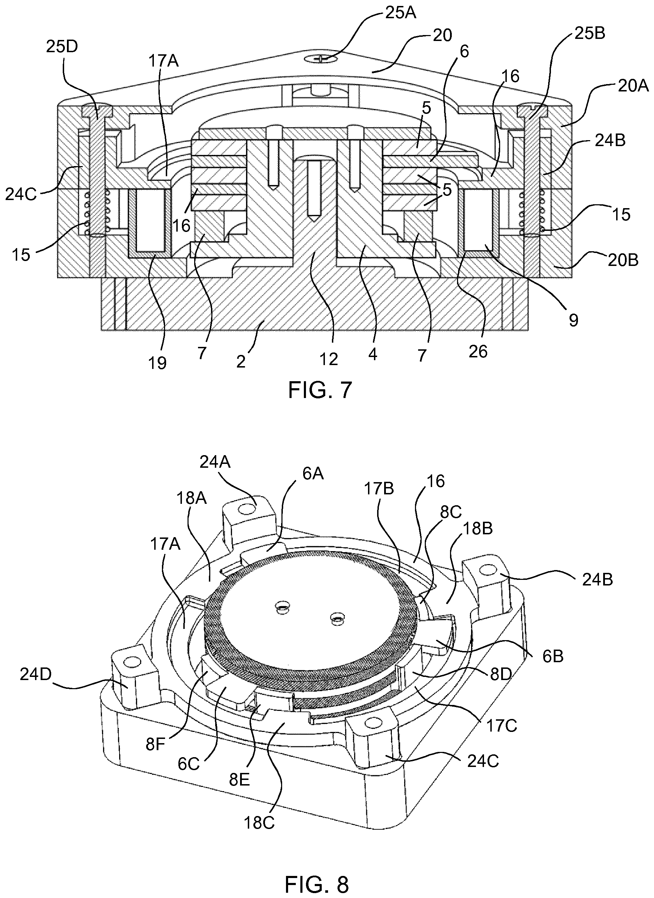

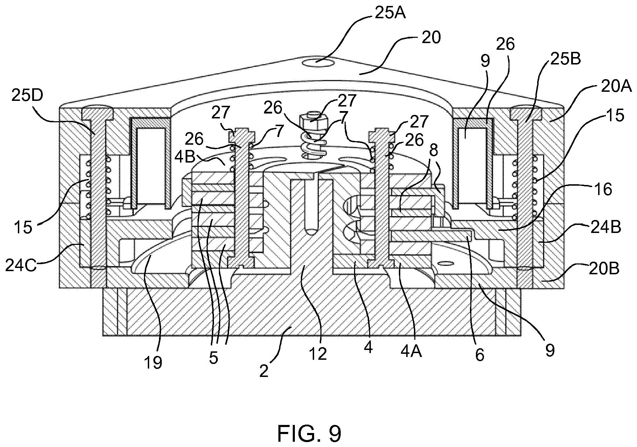

In Figs. 7, 8 and 9 multiple disc brakes 10 with other actuating arrangements 9 are shown. The actuating arrangement 9 here includes an electromagnetic coil 19. The electromagnetic coil 19 is accommodated in a coil holder 26. Since the electromagnetic coil 19 extends around the hub 4, a stop member in the form of a braking ring 16 is used. The braking ring 16 has at least one incision 17A, 17B, 17C matching the at least one brake protrusion 6A, 6B, 6C. The number of incisions 17A, 17B, 17C is here three, but the number may instead by one, two, four or five etc. The number of brake protrusions 6A, 6B, 6C is here three, but the number may instead by one, two, four or five. Between two incisions 17A, 17B, 17C there is a bump 18A, 18B, 18C, thus three bumps 18A, 18B, 18C in the embodiment shown in Figs. 7-9. The braking ring 16 includes four screw holders 24A, 24B, 24C, 24D each with a through hole in the axial direction of the hub 4. The four screw holders 24A, 24B, 24C, 24D are equally spaced around the circumferential of the braking ring 16. The number of screw holders 24A, 24B, 24C, 24D is here four, but the number could instead be three, five or more. Each screw holder 24A, 24B, 24C, 24D is arranged to receive a screw 25A, 25B, 25C, 25D, respectively and to freely hold the screw 25A, 25B, 25C, 25D. When the screws 25A, 25B, 25C, 25D are accommodated in the screw holders 24A, 24B, 24C, 24D, a push spring 15 is winded around each screw 25A, 25B, 25C, 25D in an accommodation of the housing 20. The push springs 15 are compressed between the braking ring 16 and the housing 20. The electromagnetic coil 19 is arranged to the housing 20 between the braking ring 16 and the housing 20. When power is on, the electromagnetic coil 19 is powered and attracts the braking ring 16 and allows the braking disc(s) 5 to freely rotate. Once power is off, the electromagnetic coil 19 releases the braking ring 16 whereby the push springs 15 push on the braking ring 16 in the axial direction of the hollow shaft 11, blocking the braking disc 6 and preventing it from moving. Braking disc 6 is blocked because of the brake protrusions 6A, 6B, 6C on the braking ring 16. In Figs. 7 and 8 an embodiment is shown where the electromagnetic coil 19 is attached to a bottom housing part 20B of the housing 20. In Fig. 9 one other embodiment is shown where the electromagnetic coil 19 is attached to an upper housing part 20A of the housing 20. The braking ring 16 and the electromagnetic coil 19 are in these embodiments placed such that the number of wear surfaces is minimized, in the direction of movement of the braking ring 16 when the braking ring 16 is released from the electromagnetic coil 19. This direction corresponds to the axial direction of the hollow shaft 11 away from the electromagnetic coil 19. For example in the embodiment shown in Fig. 7 and 8, the braking ring 16 moves upwards in the axial direction away from the electromagnetic coil 9 when the braking ring 16 is released, which means that there is only one friction surface between the braking disc 6 and friction disc 5 above. Once that friction surface of the friction disc 5 wears down, the braking ring 16 will have to travel a longer distance corresponding to the wear of only one friction surface to stop the braking disc 6. If the electromagnetic coil 19 instead was placed to the upper housing part 20A and the braking ring 16 above the braking disc 6 in Fig. 7 and 8, there would be three wear surfaces below the braking disc 6 because of the two friction discs 5 and one clamping disc 8 below the braking disc 6. When the surfaces of the friction discs 5 wear down, the braking disc 6 has to be moved a longer distance corresponding to the wear of several friction surfaces to accommodate for this wear, which is not desired. The discs on the hub 4 are also arranged to the hub 4 such that the distance of travel for the braking ring 16 becomes minimized. The disc brakes 10 in Figs. 7-9 have only one friction disc 5 positioned after the braking disc 6 in the direction of movement of the braking ring 16 when the braking ring 16 is released from the electromagnetic coil 19.

In the embodiment illustrated in Fig. 9 the electromagnetic coil 19 is attached to the upper housing part 20A. In similarity with the embodiment illustrated in Fig. 7 and 8, a push spring 15 is wound around each screw 25A, 25B, 25C, 25D accommodated in the screw holders 24A, 24B, 24C, 24D. The push springs 15 are however accommodated above the braking ring 16 between the upper housing part 20A and the braking ring 16. The braking ring 16 is turned up-side down in comparison with the embodiment shown in Figs. 7 and 8, thus such that the incisions 17A, 17B, 17C and bumps 18A, 18B, 18C face the motor 2. To minimize the distance the braking ring 16 has to travel, the braking disc 6 is arranged close to the bottom member 4A of the hub 4. Only one friction disc 5 is located in between the bottom member 4A and braking disc 6. When the braking disc 6 during time wears off, the extended way the braking ring 16 has to travel because of the wear becomes limited. As can be seen from the Fig. 9, altogether three friction discs 5 are assembled to the hub 4 together with the braking disc 6 and two clamping discs 8. The friction discs 5 are arranged to the hub 4 with screws 26 such that they rotate with the motion of the hub 4. The screws 26 are axially arranged in the direction of the hollow shaft of the hub 4, and go through through holes in the upper member 4B, the braking discs 5 and the lower member 4A to form screw joints which hold the hub 4 and the thereto arranged multiple of discs together. The braking disc 6 and the clamping discs 8 are arranged to the hub 4 outside of the screws 26, such that the braking disc 6 and the clamping discs 8 may freely rotate around the hollow shaft of the hub 4. The screws 26 are arranged with a spring arrangement 7 in the shape of springs wound on the screws 26 between nuts 27 arranged on the screws 26 and the upper member 4B. The spring arrangement 7 compresses the multiple of discs arranged to the hub 4. The hollow shaft 11 here does not have a through hole, instead it is closed on its upper side such that the whole hub 4 has a shape of a hat. The inner side of the uppermost part of the hat lies against the end face of the motor shaft 12. One or several screws may hold the hub 4 to the motor shaft 12 in a secure way. The upper part 4B of the hub 4 is thus made up of a disc and the upper side of the hollow shaft 11. However, the hollow shaft 11 of the hub 4 may instead have a through hole and attached to the motor shaft 12 as in the other embodiments.

The housing 20 may be made of aluminium, and the braking disc 6 and coil holder 26 may be made of steel in order to be able to carry the magnetic flux. A challenge when designing the multiple disc brake 10 is to dimension the electromagnetic coil 19 properly. In one embodiment, it should be able to pull the braking ring 16 from 1.5 mm distance with force of around 1-2 N and to be able to hold it with slightly bigger force when in contact. In order to achieve this, the electromagnetic coil 19 has to be properly designed. Since the size of the electromagnetic coil 19 is defined from the size and shape of the multiple disc brake 10 and input voltage is 24 V, current and wire diameter of the electromagnetic coil 19 are the main design parameters.

The present invention is not limited to the above-described preferred embodiments. Various alternatives, modifications and equivalents may be used. Therefore, the above embodiments should not be taken as limiting the scope of the invention, which is defined by the appending claims.

**Claims**

1. A multiple disc brake (10) for an industrial robot (1), wherein the multiple disc brake (10) includes a hub (4) and at least one friction disc (5) **characterized in that** the at least one friction disc (5) is arranged to the hub (4) such that it rotates with the motion of the hub (4) when the hub (4) is rotating, the multiple disc brake (10) further includes a braking disc (6) arranged freely rotatable to the hub (4), wherein the braking disc (6) has at least one brake protrusion (6A, 6B) protruding in a radial direction of the braking disc (6), the multiple disc brake (10) further includes an actuating arrangement (9) including an actuator (13) and a stop member (14, 16), wherein the actuating arrangement (9) is arranged to move the stop member (14, 16) such that the stop member (14, 16) and the at least one brake protrusion (6A, 6B) become engaged, whereby any rotational motion of the braking disc (6) is halted and a braking force is created by friction acting between the at least one friction disc (5) and the braking disc (6).

2. The multiple disc brake (10) according to claim 1, including a spring arrangement (7) arranged to the hub (4) arranged to compress the braking disc (6) and the at least one friction disc (5).

3. The multiple disc brake (10) according to claim 1 or 2, including a clamping disc (8) arranged to the hub (4), the clamping disc (8) has a plurality of clamping protrusions (8A, 8B, 8C, 8D) protruding in a radial direction of the clamping disc (8), where at least one brake protrusion (6A, 6B) is accommodated in between two clamping protrusions (8A, 8B, 8C, 8D).

4. The multiple disc brake (10) according to claim 3, wherein one of the at least one friction disc (5) is interleaved between the clamping disc (8) and the braking disc (6).

5. The multiple disc brake (10) according to any of the preceding claims, wherein the stop member (14, 16) is fixed in the rotational directions of the braking disc (6), and movable in an axial direction of the hollow shaft (11) of the hub (4).

6. The multiple disc brake (10) according to any of the preceding claims, including a housing (10) accommodating the hub (4) and the actuating arrangement (9), wherein the housing (10) is arranged to be attached to a motor (2) of an axis of an industrial robot (1).

7. The multiple disc brake (10) according to any of the preceding claims, including two or three friction discs (5).

8. The multiple disc brake (10) according to any of the preceding claims, wherein the actuator (13) is an electromechanical actuator.

9. The multiple disc brake (10) according to claim 8, wherein the actuator (13) includes an electromagnetic coil.

10. The multiple disc brake (10) according to claim 8, wherein the actuator (13) includes a solenoid.

11. The multiple disc brake (10) according to any of the preceding claims, wherein the stop member (14, 16) is a braking ring (16) with at least one incision matching the at least one brake protrusion (6A, 6B).

12. An industrial robot (1) with a multiple disc brake (10) according to any one of the claims 1 to 11 arranged to a motor shaft (12) of a motor (2) of an axis of the industrial robot (1).

**13.** The industrial robot (1) according to claim 12, wherein the multiple disc brake (10) is arranged to the motor shaft (12) of a rear side of the motor (2).

**Patentansprüche**

**1.** Multischeibenbremse (10) für einen Industrieroboter (1), wobei die Multischeibenbremse (10) eine Nabe (4) und zumindest eine Reibscheibe (5) beinhaltet, **dadurch gekennzeichnet, dass** die zumindest eine Reibscheibe (5) an der Nabe (4) angeordnet ist, sodass sie sich mit der Bewegung der Nabe (4) dreht, wenn sich die Nabe (4) dreht, wobei die Multischeibenbremse (10) ferner eine Bremsscheibe (6) beinhaltet, die frei drehbar an der Nabe (4) angeordnet ist, wobei die Bremsscheibe (6) zumindest einen Bremsvorsprung (6A, 6B) aufweist, der in einer radialen Richtung der Bremsscheibe (6) vorspringt, wobei die Multischeibenbremse (10) ferner eine Betätigungsanordnung (9) beinhaltet, die einen Aktuator (13) und ein Anschlagelement (14, 16), beinhaltet, wobei die Betätigungsanordnung (9) dazu angeordnet ist, das Anschlagelement (14, 16) zu bewegen, sodass das Anschlagelement (14, 16) und der zumindest eine Bremsvorsprung (6A, 6B) in Eingriff kommen, wodurch jede Drehbewegung der Bremsscheibe (6) gestoppt wird und eine Bremskraft durch Reibung, die zwischen der zumindest einen Reibscheibe (5) und der Bremsscheibe (6) wirkt, erzeugt wird.

**2.** Multischeibenbremse (10) nach Anspruch 1, beinhaltend eine an der Nabe (4) angeordnete Federanordnung (7), die dazu angeordnet ist, die Bremsscheibe (6) und die zumindest eine Reibscheibe (5) zu komprimieren.

**3.** Multischeibenbremse (10) nach Anspruch 1 oder 2, beinhaltend eine an der Nabe (4) angeordnete Klemmscheibe (8), wobei die Klemmscheibe (8) mehrere Klemmvorsprünge (8A, 8B, 8C, 8D) aufweist, die in einer radialen Richtung der Klemmscheibe (8) vorspringen, wobei zumindest ein Bremsvorsprung (6A, 6B) zwischen zwei Klemmvorsprüngen (8A, 8B, 8C, 8D) aufgenommen ist.

**4.** Multischeibenbremse (10) nach Anspruch 3, wobei eine der zumindest einen Reibscheibe (5) zwischen der Klemmscheibe (8) und der Bremsscheibe (6) eingefügt ist.

**5.** Multischeibenbremse (10) nach einem der vorangehenden Ansprüche, wobei das Anschlagelement (14, 16) in den Drehrichtungen der Bremsscheibe (6) fest ist und in einer axialen Richtung der Hohlwelle (11) der Nabe (4) bewegbar ist.

**6.** Multischeibenbremse (10) nach einem der vorangehenden Ansprüche, beinhaltend ein Gehäuse (10), das die Nabe (4) und die Betätigungsanordnung (9) aufnimmt, wobei das Gehäuse (10) dazu angeordnet ist, an einem Motor (2) einer Achse eines Industrieroboters (1) befestigt zu sein.

**7.** Multischeibenbremse (10) nach einem der vorangehenden Ansprüche, beinhaltend zwei oder drei Reibscheiben (5).

**8.** Multischeibenbremse (10) nach einem der vorangehenden Ansprüche, wobei der Aktuator (13) ein elektromechanischer Aktuator ist.

**9.** Multischeibenbremse (10) nach Anspruch 8, wobei der Aktuator (13) eine elektromagnetische Spule beinhaltet.

**10.** Multischeibenbremse (10) nach Anspruch 8, wobei der Aktuator (13) ein Solenoid beinhaltet.

**11.** Multischeibenbremse (10) nach einem der vorangehenden Ansprüche, wobei das Anschlagelement (14, 16) ein Bremsring (16) mit zumindest einem Einschnitt, der mit dem zumindest einen Bremsvorsprung (6A, 6B) übereinstimmt, ist.

**12.** Industrieroboter (1) mit einer Multischeibenbremse (10) nach einem der Ansprüche 1 bis 11, die an einer Motorwelle (12) eines Motors (2) einer Achse des Industrieroboters (1) angeordnet ist.

**13.** Industrieroboter (1) nach Anspruch 12, wobei die Multischeibenbremse (10) an der Motorwelle (12) einer Rückseite des Motors (2) angeordnet ist.

**Revendications**

1. Frein à disques multiples (10) pour un robot industriel (1), le frein à disques multiples (10) comprenant un moyeu (4) et au moins un disque de friction (5), **caractérisé en ce que** l'au moins un disque de friction (5) est disposé sur le moyeu (4) de façon à tourner avec le déplacement du moyeu (4) lorsque le moyeu (4) tourne, le frein à disques multiples (10) comprenant en outre un disque de freinage (6) agencé en rotation libre sur le moyeu (4), dans lequel le disque de freinage (6) comporte au moins une protubérance de frein (6A, 6B) faisant saillie dans une direction radiale du disque de freinage (6), le frein à disques multiples (10) comprenant en outre un agencement d'actionnement (9) comprenant un actionneur (13) et un élément d'arrêt (14, 16), dans lequel l'agencement d'actionnement (9) est agencé pour déplacer l'élément d'arrêt (14, 16) de sorte que l'élément d'arrêt (14, 16) et l'au moins une protubérance de frein (6A, 6B) soient en prise, moyennant quoi tout déplacement en rotation du disque de freinage (6) est arrêté et une force de freinage est créée par le frottement agissant entre l'au moins un disque de friction (5) et le disque de freinage (6).

2. Frein à disques multiples (10) selon la revendication 1, comprenant un agencement à ressort (7) disposé sur le moyeu (4) agencé pour comprimer le disque de freinage (6) et l'au moins un disque de friction (5).

3. Frein à disques multiples (10) selon la revendication 1 ou 2, comprenant un disque de serrage (8) disposé sur le moyeu (4), le disque de serrage (8) comportant une pluralité de protubérances de serrage (8A, 8B, 8C, 8D) faisant saillie dans une direction radiale du disque de serrage (8), dans lequel l'au moins une protubérance de frein (6A, 6B) est logée entre deux protubérances de serrage (8A, 8B, 8C, 8D).

4. Frein à disques multiples (10) selon la revendication 3, dans lequel l'un de l'au moins un disque de friction (5) est intercalé entre le disque de serrage (8) et le disque de freinage (6).

5. Frein à disques multiples (10) selon l'une quelconque des revendications précédentes, dans lequel l'élément d'arrêt (14, 16) est fixe dans les directions de rotation du disque de freinage (6) et mobile dans une direction axiale de l'arbre creux (11) du moyeu (4).

6. Frein à disques multiples (10) selon l'une quelconque des revendications précédentes, comprenant un logement (10) logeant le moyeu (4) et l'agencement d'actionnement (9), dans lequel le logement (10) est agencé pour être fixé à un moteur (2) d'un axe d'un robot industriel (1).

7. Frein à disques multiples (10) selon l'une quelconque des revendications précédentes, comprenant deux ou trois disques de friction (5).

8. Frein à disques multiples (10) selon l'une quelconque des revendications précédentes, dans lequel l'actionneur (13) est un actionneur électromécanique.

9. Frein à disques multiples (10) selon la revendication 8, dans lequel l'actionneur (13) comprend une bobine électromagnétique.

10. Frein à disques multiples (10) selon la revendication 8, dans lequel l'actionneur (13) comprend un solénoïde.

11. Frein à disques multiples (10) selon l'une quelconque des revendications précédentes, dans lequel l'élément d'arrêt (14, 16) est une bague de freinage (16) comportant au moins une incision correspondant à l'au moins une protubérance de frein (6A, 6B).

12. Robot industriel (1) comportant un frein à disques multiples (10) selon l'une quelconque des revendications 1 à 11, disposé sur un arbre de moteur (12) d'un moteur (2) d'un axe du robot industriel (1).

13. Robot industriel (1) selon la revendication 12, dans lequel le frein à disques multiples (10) est disposé sur l'arbre de moteur (12) d'un côté arrière du moteur (2).

FIG. 1

FIG. 2

FIG. 3

FIG. 4

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1974870 A1